# EUROPÄISCHE PATENTSCHRIFT

(11) **EP 1 384 655 B1**
(45) Veröffentlichungstag und Bekanntmachung des Hinweises auf die Patenterteilung: **07.06.2006**
(21) Anmeldenummer: 03015350.6
(22) Anmeldetag: 08.07.2003
(51) Int. Cl.: B62D 25/06, B62D 65/00

(54) **Fahrzeugdachmodul**
Vehicle roof module
Module de toit de véhicule

(30) Priorität: 23.07.2002 DE 10233280
(43) Veröffentlichungstag der Anmeldung: 28.01.2004
(73) Patentinhaber: ArvinMeritor GmbH, 63128 Dietzenbach (DE)
(72) Erfinder: Böhm, Horst, Dipl.-Ing., 60599 Frankfurt (DE); Grimm, Rainer, Dipl.-Ing., 60599 Frankfurt (DE); Becher, Thomas, Dipl.-Ing., 63110 Rodgau (DE)
(74) Vertreter: Oppermann, Ewald

(56) Entgegenhaltungen:
- EP-A- 1 088 749
- WO-A-03/045762
- DE-A- 2 929 689
- DE-A- 3 420 781
- DE-A- 19 709 016
- US-A1- 2002 042 996

## Beschreibung

Die Erfindung bezieht sich auf ein Fahrzeugdachmodul, insbesondere Kraftfahrzeug-Dachmodul, entsprechend dem Oberbegriff des Patentanspruchs 1.

Derartige modulartig einbaufertig vorgefertigte Fahrzeugdächer (DE 197 09 016 A1) werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Bei einer bekannten Dachanordnung für ein Kraftfahrzeug mit einem karosseriefesten umlaufenden Dachrahmen und einem mit diesem unter Verwendung von Schnellverschlüssen lösbar verbundenen starren Dachteil (DE 29 29 915 A1) ist das Dachteil nur an seinem der Windschutzscheibe oder der Heckscheibe des Fahrzeugs zugekehrten Endbereich mit in Richtung auf den jeweils anderen Endbereich weisenden Haken versehen. Diese hintergreifen ein Gegenprofil am Dachrahmen. Die nach Art von Exzenterverschlüssen ausgebildeten Schnellverschlüsse greifen nur an dem jeweils anderen Endbereich des Dachteils an. Zwischen dem Dachteil und dem Dachrahmen ist eine umlaufende Dichtung eingespannt.

Zwar ist bei dieser bekannten Dachanordnung das Dachteil von der Karosserie durch Entriegeln der Schnellverschlüsse lös- und abnehmbar, jedoch ist das Dachteil in seinen beiden Seitenbereichen nicht an dem Dachrahmen befestigt, so daß in diesen Bereichen die Abdichtung des Dachteils gegenüber dem Dachrahmen problematisch ist. Die Schnellverschlüsse sind bei dieser Dachkonstruktion nicht zum Fahrzeuginnenraum hin abgedeckt bzw. abdeckbar, treten daher am Dachhimmel störend in Erscheinung und können bei Unfällen Verletzungen der Fahrzeuginsassen hervorrufen. Darüber hinaus besteht die nicht von der Hand zu weisende Gefahr, daß der Eingriff der Haken mit dem Gegenprofil am Dachrahmen bei verschlossenem Fahrzeug von außen her zugänglich ist, so daß das Dachteil durch Fremdeingriff unerwünscht leicht entfernt werden könnte.

Der vorliegenden Erfindung liegt die Aufgabe zugrunde, bei einem Fahrzeugdachmodul der eingangs bezeichneten Ausbildung dieses ohne Schnellverschlüsse od.dgl. schnell montierbar und nur vom Fahrzeuginneren her abnehmbar zu gestalten, ohne daß lösbare Befestigungsmittel vom Fahrzeuginneren her sichtbar sind.

Diese Aufgabe wird erfindungsgemäß durch die kennzeichnenden Merkmale des Patentanspruchs 1 gelöst. Vorteilhafte oder zweckmäßige Weiterbildungen gehen aus den Unteransprüchen hervor und sind nachfolgend ebenfalls näher beschrieben.

Das erfindungsgemäß ausgebildete Fahrzeugdachmodul ist lediglich durch einfache Verrastungs- bzw. Entrastungsvorgänge montierbar, demontierbar und auswechselbar, ohne daß dazu besondere Werkzeuge erforderlich sind und ohne daß sich die Rastelemente verletzungsgefährdend im Sichtbereich befinden. Da die Rastelemente innen am Karosserierahmen angreifen, läßt sich das Fahrzeugdachmodul ausschließlich vom Fahrzeuginnenraum her entrasten. Das erfindungsgemäße Fahrzeugdachmodul läßt sich praktisch wie ein abnehmbares und ggf. austauschbares Hardtop handhaben.

Die im Anspruch 2 angegebenen Vorsprünge der unteren Schicht der Innenschale sichern den Rasteingriff der Rastelemente mit der Innenkante des Karosserierahmens bzw. einer fest damit verbundenen Rahmenverkleidung zusätzlich. Dabei können die Vorsprünge über einen daran angebrachten Verrastungshaken außerdem noch lösbar mit einem Gegenhaken der Rastelemente verrastbar sein, wie das aus Anspruch 3 hervorgeht.

Die vorstehend beschriebenen Vorsprünge können zweckmäßig bereits bei der Schäumherstellung der Innenschale an die untere Schicht derselben angeformt werden, wie aus Anspruch 4 hervorgeht.

Die Rastelemente selbst sind gemäß Anspruch 5 vorteilhaft winkelförmig ausgebildet, mit einem an bzw. in der oberen Schicht der Innenschale an- bzw. eingeschäumten Befestigungsschenkel und einem nach unten abstehenden Verrastungsschenkel, der federnd nachgiebig ist und im Verrastungsbereich nach Art einer Haarnadelfeder ausgebildet ist. Die Rastelemente sind zweckmäßig und dauerhaft aus Federstahl-Bandmaterial zu formen.

Weitere Einzelheiten der Erfindung werden nachfolgend anhand der drei Ausführungsbeispiele schematisch darstellenden Zeichnungen näher erläutert. Darin zeigt:

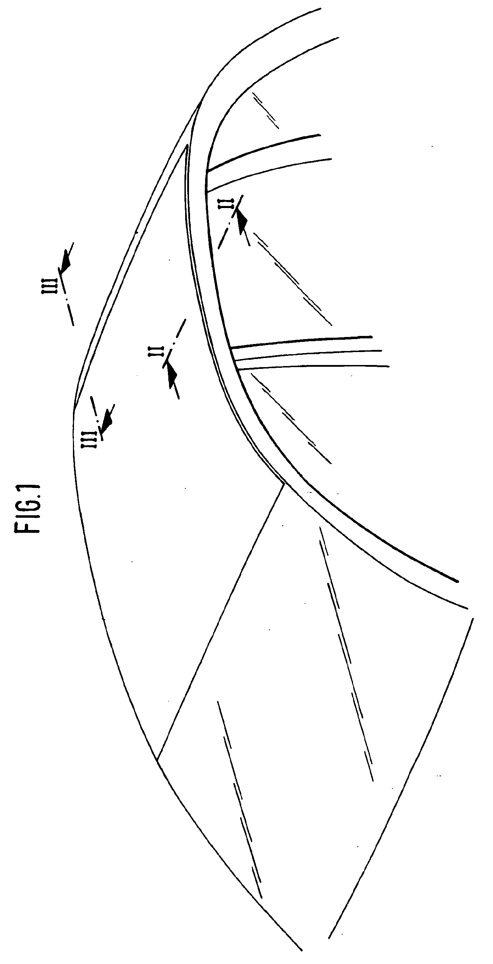

- Fig. 1: in perspektivischer Darstellung den Dach- und Fensterbereich eines Personenkraftwagens,
- Fig. 2: den Schnitt entlang der Schnittverlaufslinie II-II in Fig. 1 zur Veranschaulichung einer ersten Ausführungsform,
- Fig. 3: den Schnitt entlang der Schnittverlaufslinie III-III in Fig. 1 entsprechend einer zweiten Ausführungsform und
- Fig. 4: ebenfalls einen Schnitt entlang der Schnittverlaufslinie III-III in Fig. 1, der jedoch eine dritte Ausführungsform veranschaulicht.

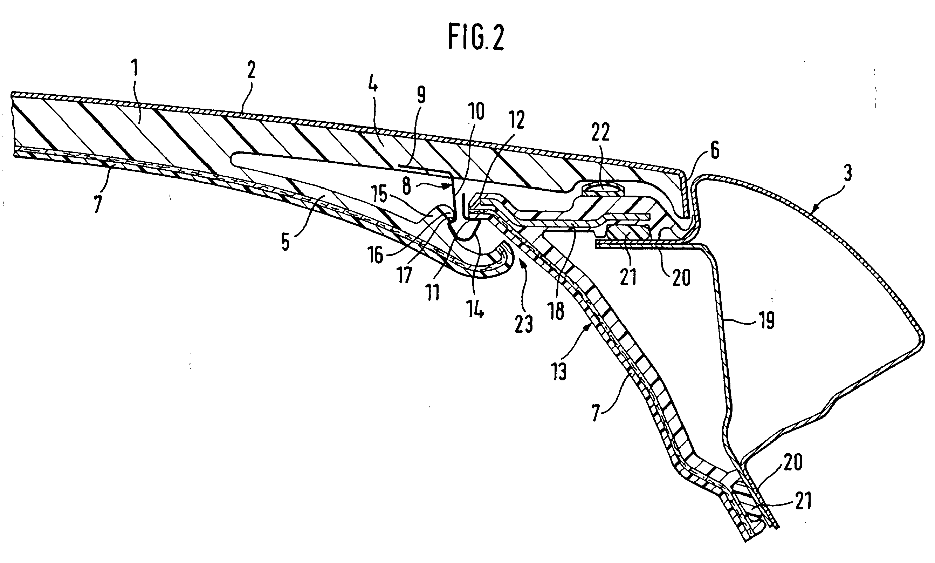

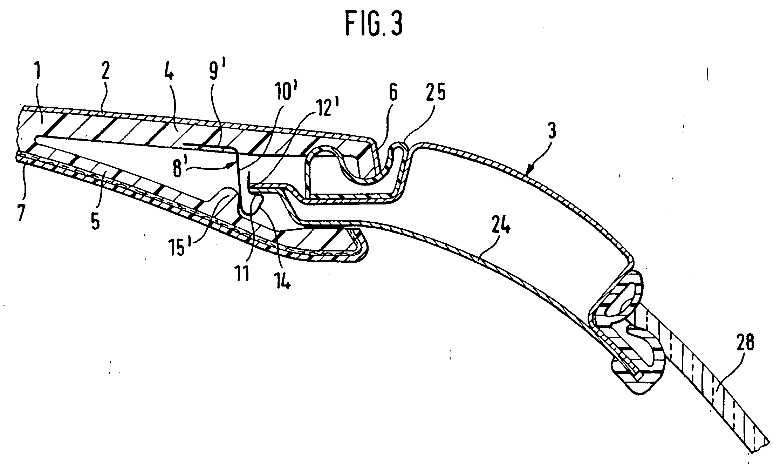

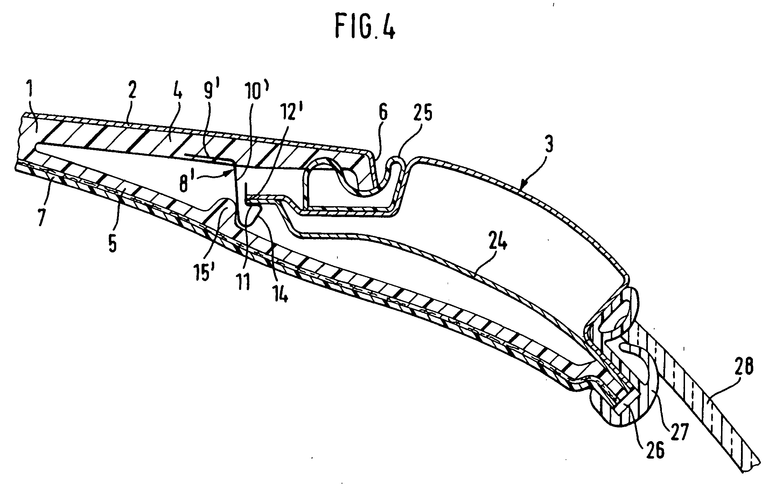

Fig. 2 zeigt einen Schnitt durch einen Seitenbereich des Fahrzeugdachmoduls, während die Figuren 3 und 4 jeweils Schnitte durch den Heckbereich des Fahrzeugdachmoduls darstellen. Die drei unterschiedlichen Ausführungsformen sind jedoch an allen vier Seiten des Fahrzeugdachmoduls jeweils dem gezeigten Schnitt entsprechend ausgebildet.

Bei allen gezeigten Ausführungsbeispielen ist die Innenschale 1 des Dachmoduls aus einem Schaumkunststoff gebildet, der auf eine starre Dachhaut 2 aufgeschäumt ist. Die starre Dachhaut 2 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten schalenförmig und eigensteif geformten Schaumkunststoff mit glatter lackierter bzw. lackierbarer Außenfläche.

Die Innenschale 1 ist bei allen Ausführungsbeispielen im Bereich der zur Auflage auf den Karosserierahmen 3 vorgesehenen Außenränder in zwei Schichten aufgeteilt, von denen die obere Schicht 4 auf für die einzelnen Ausführungsformen noch zu beschreibende Weise mittelbar auf den Karosserierahmen 3 aufgelegt ist, während die untere Schicht 5 über die vom Karosserierahmen 3 begrenzte Karosserieöffnung übersteht und für den Durchtritt durch diese Öffnung nach unten ohne bleibende Deformationen umbiegbar ist.

Geeignete Werkstoffe für die Innenschale 1 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 1, deren obere Schicht 4 bis zu einer Randabkantung 6 der Dachhaut 2 reicht, entsteht ein sandwichartiges Verbunddachmodul hoher Formbeständigkeit und Festigkeit. Alle Innenkonturen der Innenschale 1 einschließlich der unteren Schicht 5 werden durch entsprechende Formgebung der Schäumform (nicht dargestellt) gebildet.

Die Innenfläche der Innenschale 1 kann zur Ausbildung eines Dachhimmels mit einem textilen oder folienartigen Bezugsmaterial 7 beschichtet sein. In die obere Schicht 4 können Verstärkungsteile (nicht dargestellt) in Form von Profilen in den Schaumstoff eingebettet sein. Nachfolgend werden jetzt die drei unterschiedlich ausgebildeten Ausführungsformen anhand der Figuren 2 bis 4 beschrieben.

Wie aus den Figuren 2 bis 4 hervorgeht, sind an der oberen Schicht 4 federelastische Rastelemente 8 bzw. 8' befestigt, von denen an jeder der vier Seiten des Dachmoduls mehrere angebracht sein können. In den gezeigten Ausführungsbeispielen sind die Rastelemente 8, 8' winkelförmig ausgebildet, mit einem der oberen Schicht 4 zugeordneten Befestigungsschenkel 9 bzw. 9' und einem nach Art einer Haarnadelfeder ausgebildeten Verrastungsschenkel 10 bzw. 10'. Die Rastelemente 8, 8' sind aus Federstahl-Bandmaterial geformt.

Bei allen dargestellten Ausführungsformen ist der Verrastungsschenkel 10, 10' an seiner dem Dachrahmen 3 zugekehrten Seite mit einer nach innen abgebogenen Raststufe 11 versehen, welche bei der Ausführungsform nach Fig. 2 mit der Innenkante 12 einer Rahmenverkleidung 13 und bei den Ausführungsformen nach den Figuren 3 und 4 mit der Innenkante 12' des Karosserierahmens 3 selbst in einem lösbaren Verrastungseingriff steht. Zur Erleichterung des Verrastens mit der Innenkante 12, 12' besitzt der Verrastungsschenkel 10, 10' eine Schrägfläche 14, welche auf der Innenkante 12, 12' beim Verrastungsvorgang unter gleichzeitiger elastischer Biegeverformung des Verrastungsschenkels 10, 10' gleitet, bis die Raststufe 11 unter der Innenkante 12, 12' unter elastischer Rückstellung des Verrastungsschenkels 10, 10' verrastet ist. Die verrastete Lage der Teile ist in den Figuren 2 bis 4 dargestellt.

Bei allen drei Ausführungsformen deckt die untere Schicht 5 die Rastelemente 8, 8' vollständig ab, so daß diese weder unmittelbar zugänglich sind noch eine Verletzungsgefahr für Fahrzeuginsassen hervorrufen können. Erst nach Umbiegen der unteren Schicht 5 nach unten können die Rastelemente 8, 8' betätigt werden. Dieses geschieht durch elastisches Biegen der Verrastungsschenkel 10, 10', bis die Raststufe 11 nicht mehr mit der Innenkante 12, 12' eingreift, worauf dann das Dachmodul nach oben bewegt werden kann.

An der unteren Schicht 5 sind der oberen Schicht 4 zugekehrte Vorsprünge 15 bzw. 15' (Figuren 3 und 4) vorgesehen, die in den gezeichneten Beispielen einteilig der unteren Schicht 5 aus Schaumkunststoff angeformt sind. Diese Vorsprünge liegen den an der Innenkante 12, 12' verrasteten Rastelementen 8, 8' an und sichern so zusätzlich die Verrastungslage derselben. Bei der Ausführungsform nach Fig. 2 ist an dem Vorsprung 15 zusätzlich ein Verrastungshaken 16 angeformt, der lösbar mit einem entsprechenden Gegenhaken 17 am Rastelement 8 verrastet ist. Die bei der Ausführungsform gemäß Fig. 2 vorgesehene Rahmenverkleidung 13 ist aus einem harten Schaumkunststoff geformt, besitzt eine obere eingeschäumte Verstärkungseinlage 18 und ist an Flanschen 20 des Holms 19 des Karosserierahmens 3 beispielsweise durch Kleberraupen 21 befestigt. Das Dachmodul liegt mit der oberen Schicht 4 abgedichtet einer an der Rahmenverkleidung 13 befestigten elastischen Hohlkammerdichtung 22 auf.

Die Rahmenverkleidung 13 ist ebenfalls zum Fahrzeuginnenraum hin mit Bezugsmaterial 7 beschichtet. Die untere Schicht 5 ist an ihrem Ende umgebogen und endet mit Abstand zu der Rahmenverkleidung 13, so daß zwischen der Rahmenverkleidung 13 und dem unteren Ende der unteren Schicht 5 ein Eingriffsspalt 23 gebildet wird, der ein Abbiegen der unteren Schicht 5 unter Aufhebung der Verrastung zwischen den Verrastungshaken 16 und den Gegenhaken 17 ermöglicht, um die Rastelemente 8 für die Entrastung des Dachmoduls zugänglich zu machen. Bei den in den Figuren 3 und 4 dargestellten Ausführungsformen liegt das Dachmodul mit seiner Randabkantung 6 und dem daran befindlichen Abschnitt der oberen Schicht 4 dem Holm 24 des Karosserierahmens 3 unter Zwischenlage einer elastischen, an dem Holm 24 befestigten Hohlkammerdichtung 25 auf. Während bei der Ausführungsform nach Fig. 3 die untere Schicht 5 den Holm 24 nicht verkleidet, sondern an ihrem Ende mit dem Holm 24 lösbar verklebt oder über Klettverschlüsse verbunden ist, verkleidet bei der Ausführungsform gemäß Fig. 4 die untere Schicht 5 den Holm 24 vollständig und ist an ihrem Ende lösbar in eine Nut 26 eines Dichtprofils 27 eingesteckt, welches auch die Abdichtung der Heckfensterscheibe 28 besorgt.

Es wird ein Fahrzeugdachmodul vorgeschlagen, welches lösbar aber sicher direkt mit dem eine obere Karosserieöffnung einfassenden Karosserierahmen oder indirekt mit einer daran befestigten Rahmenverkleidung verrastet ist. Die Verrastungselemente sind zum Lösen der Verrastung nur vom Fahrzeuginnenraum her zugänglich und auch nur nach vorhergehendem elastischen Umbiegen eines die Rastelemente verkleidenden Abschnitts der Innenschale des Dachmoduls. Das Dachmodul kann leicht montiert, demontiert und auch ausgewechselt werden und weist somit Eigenschaften eines Hardtops auf.

### Bezugszeichenliste

- 1: Innenschale
- 2: Dachhaut
- 3: Karosserierahmen
- 4: obere Schicht
- 5: untere Schicht
- 6: Randabkantung
- 7: Bezugsmaterial
- 8, 8': Rastelemente
- 9, 9': Befestigungsschenkel
- 10, 10': Verrastungsschenkel
- 11: Raststufe
- 12, 12': Innenkante
- 13: Rahmenverkleidung
- 14: Schrägfläche
- 15, 15': Vorsprünge
- 16: Verrastungshaken
- 17: Gegenhaken
- 18: Verstärkungseinlage
- 19: Holm
- 20: Flansche
- 21: Kleberraupen
- 22: Hohlkammerdichtung
- 23: Eingriffsspalt
- 24: Holm
- 25: Hohlkammerdichtung
- 26: Nut
- 27: Dichtprofil
- 28: Heckfensterscheibe

## Patentansprüche

1. Fahrzeugdachmodul, insbesondere Kraftfahrzeug-Dachmodul, das sandwichartig und an seiner aus Schaumkunststoff geformten Innenschale (1) als Dachhimmel ausgebildet, getrennt von der Fahrzeugkarosserie hergestellt, mit seinen Außenrändern auf einen Karosserierahmen (3) auflegbar und mit diesem verbindbar ist, wobei die Innenschale (1) im Bereich ihrer Außenränder in zwei Schichten (4, 5) aufgeteilt ist, von denen die obere Schicht (4) abgedichtet auf den Karosserierahmen (3) von oben auflegbar ist, während die untere Schicht (5) elastisch nach unten umbiegbar ist, **dadurch gekennzeichnet, daß** an der oberen Schicht (4) federelastische Rastelemente (8, 8') befestigt sind, die zum lösbaren Verrastungseingriff mit der Innenkante (12, 12') des Karosserierahmens (3) oder einer damit fest verbundenen Rahmenverkleidung (13) ausgebildet, von der unteren Schicht (5) von unten abgedeckt und nach Umbiegen der unteren Schicht (5) vom Fahrzeuginnenraum her zur Entrastung zugänglich sind.

2. Fahrzeugdachmodul nach Anspruch 1, **dadurch gekennzeichnet, daß** die untere Schicht (5) mit der oberen Schicht (4) zugekehrten Vorsprüngen (15, 15') versehen ist, die den Rastelementen (8, 8') anliegen und durch welche die Rastelemente (8, 8') mit der Innenkante (12, 12') im Verrastungseingriff gehalten sind.

3. Fahrzeugdachmodul nach den Ansprüchen 1 und 2, **dadurch gekennzeichnet, daß** die Vorsprünge (15) einen den Rastelementen (8) zugekehrten Verrastungshaken (16) besitzen, der lösbar mit einem entsprechenden Gegenhaken (17) der Rastelemente (8) verrastbar ist.

4. Fahrzeugdachmodul nach Anspruch 2 oder 3, **dadurch gekennzeichnet, daß** die Vorsprünge (15, 15') einteilig der unteren Schicht (5) aus Schaumkunststoff angeformt sind.

5. Fahrzeugdachmodul nach einem der Ansprüche 1 bis 4, **dadurch gekennzeichnet, daß** die Rastelemente (8, 8') winkelförmig ausgebildet sind, mit einem der oberen Schicht (4) zugeordneten Befestigungsschenkel (9, 9') und einem nach Art einer Haarnadelfeder ausgebildeten Verrastungsschenkel (10, 10').

6. Fahrzeugdachmodul nach einem der Ansprüche 1 bis 5, **dadurch gekennzeichnet, daß** die Rastelemente (8, 8') aus Federstahl-Bandmaterial geformt sind.

## Claims

1. Vehicle roof module, in particular motor vehicle roof module, which is made in a sandwich-like fashion and at its inner shell (1), which is shaped from foamed plastics material, as an inside roof lining, produced separately from the vehicle body and can be placed with its outer edges on a body frame (3) and connected to the latter, wherein the inner shell (1) is divided in the region of its outer edges into two layers (4, 5), the upper layer (4) of which can be placed from above in a sealed fashion on the body frame (3), while the lower layer (5) can be bent over elastically downwards, **characterised in that** springy locking elements (8, 8') are fastened to the upper layer (4), which elements are constructed for releasable interlocking engagement with the inner edge (12, 12') of the body frame (3) or a frame covering (13) firmly connected thereto, are completely covered from below by the lower layer (5) and are accessible from the vehicle interior for unlocking after bending over the lower layer (5).

2. Vehicle roof module according to Claim 1, **characterised in that** the lower layer (5) is provided with projections (15, 15') which face the upper layer (4), lie against the locking elements (8, 8') and through which the locking elements (8, 8') are held in interlocking engagement with the inner edge (12, 12').

3. Vehicle roof module according to Claims 1 and 2, **characterised in that** the projections (15) have an interlocking hook (16) which faces the locking elements (8) and can be releasably interlocked with a corresponding mating hook (17) of the locking elements (8).

4. Vehicle roof module according to Claim 2 or 3, **characterised in that** the projections (15, 15') are integrally moulded onto the lower layer (5) of foamed plastics material.

5. Vehicle roof module according to any one of Claims 1 to 4, **characterised in that** the locking elements (8, 8') are angular, with a fastening limb (9, 9') which is associated with the upper layer (4) and an interlocking limb (10, 10') which is in the form of a hairpin spring.

6. Vehicle roof module according to any one of Claims 1 to 5, **characterised in that** the locking elements (8, 8') are shaped from spring steel strip material.

## Revendications

1. Module de toit de véhicule, en particulier module de toit de véhicule automobile qui est réalisé à la manière d'un sandwich et de sorte que sa coque intérieure (1) formée en mousse de matière plastique constitue un pavillon de toiture, qui est fabriqué séparément de la carrosserie du véhicule et qui peut être posé par ses bordures extérieures sur un cadre de carrosserie (3) et être relié à celui-ci, ladite coque intérieure (1) étant subdivisée dans la région de ses bordures extérieures en deux couches (4, 5) parmi lesquelles la couche supérieure (4) peut être posée depuis le haut de manière étanchée sur le cadre de carrosserie (3) tandis que la couche inférieure (5) peut être rabattue vers le bas de manière élastique, **caractérisé en ce que** des éléments d'enclenchement (8, 8') présentant l'élasticité d'un ressort sont fixés sur la couche supérieure (4), lesdits éléments étant réalisés pour établir un engagement d'enclenchement détachable avec l'arête intérieure (12, 12') du cadre de carrosserie (3) ou d'un habillage de cadre (13) relié fermement au cadre, étant recouverts depuis le bas par la couche inférieure (5), et étant accessibles depuis l'habitacle du véhicule pour le désenclenchement après rabattement de la couche inférieure (5).

2. Module de toit de véhicule selon la revendication 1, **caractérisé en ce que** la couche inférieure (5) est pourvue de saillie (15, 15') tournées vers la couche supérieure (4), lesdites saillies étant appliquées contre les éléments d'enclenchement (8, 8') et les éléments d'enclenchement (8, 8') étant maintenus par lesdites saillies en engagement d'enclenchement avec l'arête intérieure (12, 12').

3. Module de toit de véhicule selon les revendications 1 et 2, **caractérisé en ce que** les saillies (15) possèdent un crochet d'enclenchement (16) tourné vers les éléments d'enclenchement (8), crochet qui peut être enclenché de façon détachable avec un crochet antagoniste correspondant (17) des éléments d'enclenchement (8).

4. Module de toit de véhicule selon la revendication 2 ou 3, **caractérisé en ce que** les saillies (15, 15') sont conformées d'une seule pièce avec la couche inférieure (5) en mousse de matière plastique.

5. Module de toit de véhicule selon l'une des revendications 1 à 4, **caractérisé en ce que** les éléments d'enclenchement (8, 8') sont réalisés sous forme angulaire, avec un bras de fixation (9, 9') associé à la couche supérieure (4) et un bras d'enclenchement (10, 10') réalisé à la manière d'un ressort en épingle à cheveux.

6. Module de toit de véhicule selon l'une des revendications 1 à 5, **caractérisé en ce que** les éléments d'enclenchement (8, 8') sont formés à partir de bandes d'acier-ressort.
